# EUROPÄISCHE PATENTANMELDUNG

(11) **EP 1 008 501 A1**
(43) Veröffentlichungstag der Anmeldung: **14.06.2000**
(21) Anmeldenummer: 98123686.2
(22) Anmeldetag: 11.12.1998
(51) Int. Cl.: B60S 1/48

(54) **Scheibenwaschanlage für Fahrzeuge**

(71) Anmelder: ROBERT BOSCH GMBH, 70442 Stuttgart (DE)
(72) Erfinder: Pertosa, Giuseppe, 72770 Reutlingen (DE)

(57) **Zusammenfassung**

Die Erfindung geht aus von einer Scheibenwaschanlage für Fahrzeuge (10) mit einem Wasserbehälter (20), Spritzdüsen (16, 18) und einer Pumpe (22), die Wasser mit Druck aus dem Wasserbehälter (20) zu den Spritzdüsen (16, 18) fördert.

Es wird vorgeschlagen, daß der Druck in Abhängigkeit von der Anströmgeschwindigkeit des Fahrtwinds relativ zum Fahrzeug (10) steuerbar ist.

## Beschreibung

### Stand der Technik

Die Erfindung geht aus von einer Scheibenwaschanlage für Fahrzeuge nach dem Oberbegriff des Anspruchs 1.

Scheibenwaschanlagen für Fahrzeuge werden in der Regel in Verbindung mit Scheibenwischern verwendet und betätigt, wenn die Feuchtigkeit durch Niederschläge nicht ausreicht, die Fahrzeugscheibe zu säubern. Sie beinhalten einen Wasserbehälter, Spritzdüsen und eine Pumpe, die Wasser, dem unter Umständen Reinigungs- und Antigefriermittel beigesetzt sind, mit Druck aus dem Wasserbehälter zu den Spritzdüsen fördert. Der Förderdruck der Pumpe ist auf die Spritzdüsen abgestimmt und die Spritzdüsen sind so ausgerichtet, daß sie bei Stillstand des Fahrzeugs das Wasser großflächig über den Wischbereich der Scheibenwischer verteilen, ohne daß Passanten vom Wasser getroffen werden.

Bei starkem Wind oder erhöhter Fahrgeschwindigkeit wird der Spritzkegel verweht und an die Scheibe angepreßt, so daß nur ein kleiner, unzureichender Bereich der Scheibe benetzt wird. Richtet man die Spritzdüse so aus, daß bei erhöhter Geschwindigkeit ein ausreichender Bereich mit Wasser benetzt wird, besteht bei gleichem Spritzdruck und niedrigerer Geschwindigkeit oder im Stillstand des Fahrzeugs die Gefahr, daß Wasser von der Scheibe zurückprallt oder über die Scheibe hinweg gespritzt wird und Passanten trifft. Dabei steigt der Wasserverbrauch, da zuviel Wasser gefördert und ein Großteil des versprühten Wassers nicht genutzt wird. Als Folge davon muß der Wasserbehälter sehr groß dimensioniert oder sehr häufig nachgefüllt werden. Hinzu kommt, daß auch mehr umweltbelastende Reinigungsmittel und Antigefriermittel gebraucht werden.

### Vorteile der Erfindung

Nach der Erfindung wird der Druck in Abhängigkeit von der Anströmgeschwindigkeit der Luft relativ zum Fahrzeug gesteuert. Dadurch wird erreicht, daß im Stillstand und bei niedriger Geschwindigkeit das Wasser mit einem geringen Druck auf die Scheibe auftrifft und die Gefahr vermieden ist, daß Passanten belästigt werden. Ferner reduziert sich der Wasserverbrauch, während bei erhöhter Geschwindigkeit stets gewährleistet ist, daß ein ausreichender Wischbereich benetzt wird.

Die Windgeschwindigkeit kann mit einem Geschwindigkeitssensor erfaßt werden. In der Regel reicht es aus, die Fahrzeuggeschwindigkeit zu erfassen und den Druck in Abhängigkeit dieser Geschwindigkeit zu steuern, weil in den meisten Fällen die Geschwindigkeit des Fahrzeugs in erster Näherung der Anströmgeschwindigkeit entspricht.

Das Geschwindigkeitssignal, das von einem Tachometer oder einem Drehzahlmesser im Antriebsstrang des Fahrzeugs erzeugt wird, wird in einer Steuereinrichtung zu einem Stellsignal für eine elektrisch angetriebene Pumpe umgewandelt, die mit zunehmender Drehzahl einen zunehmenden Förderdruck erzeugt. Anstelle oder in Ergänzung der drehzahlgeregelten Pumpe kann es vorteilhaft sein, zwischen der Pumpe und der Spritzdüse ein elektrisch ansteuerbares Druckregelventil zu schalten. Hierdurch ist es möglich, verschiedene Scheibenwaschanlagen oder Bereiche am Fahrzeug, z.B. für die Frontscheibe, den Scheinwerfer oder die Heckscheibe, mit einem unterschiedlich gesteuerten Druck zu versorgen.

Außer der Anströmgeschwindigkeit und der Geschwindigkeit des Fahrzeugs können weitere Fahrzeugparameter oder Umgebungsparameter in die Steuerung einbezogen werden, z.B. Luft- oder Wassertemperaturen, Benetzungsgrad der Scheibe, Wischwiderstand der Scheibenwischer, Stromaufnahme der Wischermotoren oder dergleichen. Dadurch kann die Scheibenwaschanlage auf eine optimale Funktion bei minimalem Verbrauch an Wasser und Hilfsmitteln abgestimmt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht eines Fahrzeugs mit einer erfindungsgemäßen Scheibenwaschanlage,
- Fig. 2: eine Seitenansicht nach Fig. 1 mit einer alternativen Scheibenwaschanlage,
- Fig. 3: eine Frontscheibe mit einem Spritzkegel einer druckgeregelten Scheibenwaschanlage unter Windeinfluß und
- Fig. 4: eine Frontscheibe mit einem Spritzkegel einer ungeregelten Scheibenwaschanlage unter Windeinfluß.

### Beschreibung der Ausführungsbeispiele

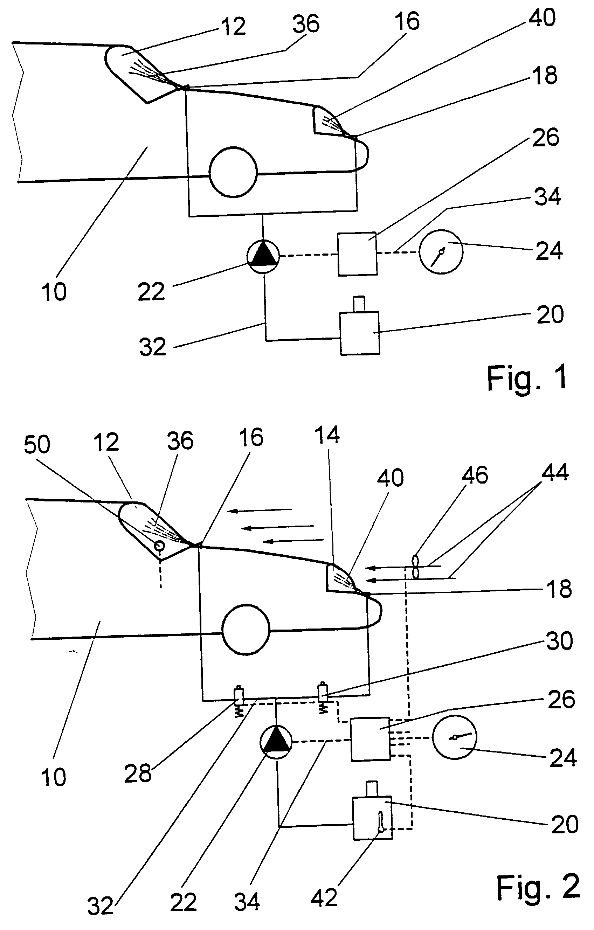

Fig. 1 zeigt die Frontpartie eines Fahrzeugs 10 von der Seite. Das Fahrzeug besitzt eine Scheibenwaschanlage für eine Windschutzscheibe 12 und Scheinwerfer 14. Eine weitere nicht dargestellte Waschanlage kann für eine Heckscheibe vorgesehen sein.

Die Waschanlage umfaßt einen Wasserbehälter 20 und eine elektrisch angetriebene, drehzahlgeregelte Pumpe 22, die Wasser aus dem Wasserbehälter 20 zu Spritzdüsen 16 für die Windschutzscheibe 12 und zu Spritzdüsen 18 für die Scheinwerfer 14 fördert. Der Druck an den Spritzdüsen 16, 18 kann in Abhängigkeit verschiedener Parameter, vorzugsweise der Anströmgeschwindigkeit der Luft relativ zum Fahrzeug 10, die durch Pfeile 44 dargestellt ist, oder der Geschwindigkeit des Fahrzeugs 10 steuerbar sein. Sensoren, z.B. ein Geschwindigkeitsmesser 24, ein Strömungsgeschwindigkeitsmesser 46, ein Thermometer 42, ein Sensor 50 zum Erfassen der Benetzung der Windschutzscheibe 12 und ein Sensor 52 zum Ermitteln des Wischwiderstands von Scheibenwischern usw., erfassen die Parameter und leiten entsprechend erzeugte Signale über Signalleitungen 34 an eine Steuereinheit 26 weiter. Die Steuereinheit 26, die einen Mikroprozessor enthält, aber auch nur aus einer logischen Schaltung aufgebaut sein kann, erzeugt Ausgangssignale für die Pumpe 22 und/oder Druckregelventile 28, 30, die in Leitungen 32 zwischen der Pumpe 22 und den Spritzdüsen 16, 18 angeordnet sind. Dadurch kann jede Spritzdüse 16, 18 individuell angesteuert werden.

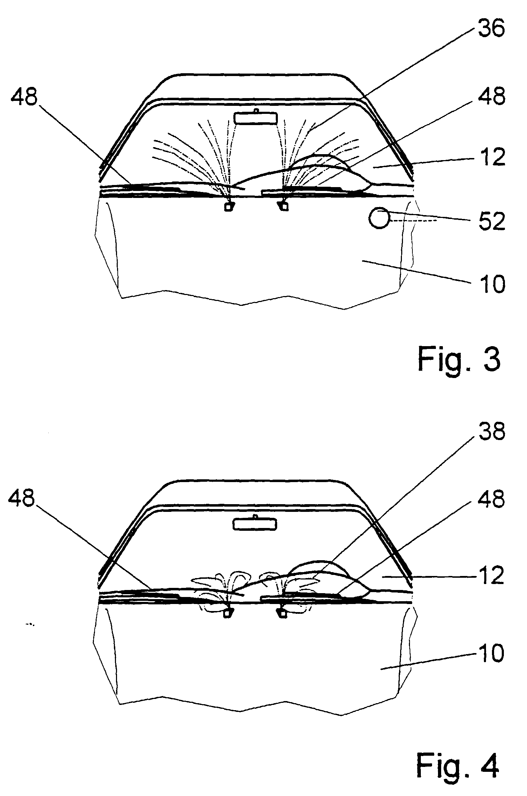

Die Scheibenwaschanlage für die Windschutzscheibe 12 arbeitet mit Scheibenwischern 48 zusammen, indem ihre Spritzdüsen 16 im Bereich des Wischfeldes bei Bedarf Wasser aufspritzen. Entsprechende nicht näher dargestellte Wischer befinden sich an den Scheinwerfern 14. Der Druck an den Spritzdüsen 16, 18 wird so geregelt, daß der Spritzkegel 36, 40 bei allen Fahrsituationen einen großen Bereich des Wischfeldes der Scheibenwischer 48 abdeckt, wobei vermieden wird, daß Wasser von der Windschutzscheibe 12 zurückprallt oder an der Windschutzscheibe 12 vorbeigespritzt wird (Fig. 3). Fig. 4 zeigt eine Windschutzscheibe 12 mit einem Spritzkegel 38, der sich unter dem Einfluß einer höheren Anströmgeschwindigkeit eines Fahrtwinds 44 ergeben würden, wenn das Fahrzeug 10 keine geregelte Scheibenwaschanlage gemäß der Erfindung besäße.

### Bezugszeichen

- 10: Fahrzeug
- 12: Windschutzscheibe
- 14: Scheinwerfer
- 16: Spritzdüse
- 18: Spritzdüse für den Scheinwerfer
- 20: Wasserbehälter
- 22: Pumpe
- 24: Sensor
- 26: Steuereinheit
- 28: Druckregelventil
- 30: Druckregelventil
- 32: Leitung
- 34: Signalleitung
- 36: Spritzkegel
- 38: Spritzkegel
- 40: Spritzkegel
- 42: Thermometer
- 44: Fahrtwind
- 46: Windgeschwindigkeitssensor
- 48: Scheibenwischer
- 50: Benetzungssensor
- 52: Widerstandssensor

## Patentansprüche

1. Scheibenwaschanlage für Fahrzeuge (10) mit einem Wasserbehälter (20), Spritzdüsen (16, 18) und einer Pumpe (22), die Wasser mit Druck aus dem Wasserbehälter (20) zu den Spritzdüsen (16, 18) fördert, dadurch gekennzeichnet, daß der Druck in Abhängigkeit von der Anströmgeschwindigkeit des Fahrtwinds (44) relativ zum Fahrzeug (10) steuerbar ist.

2. Scheibenwaschanlage nach Anspruch 1, dadurch gekennzeichnet, daß der Druck in Abhängigkeit von der Geschwindigkeit des Fahrzeugs (10) steuerbar ist.

3. Scheibenwaschanlage nach Anspruch 1 oder 2, dadurch gekennzeichnet, daß die Pumpe (22) elektrisch angetrieben und drehzahlgeregelt ist, wobei ein Sensor (24, 46) für die Regelung der Pumpe (22) ein geschwindigkeitsabhängiges Signal erzeugt.

4. Scheibenwaschanlage nach einem der vorhergehenden Ansprüche, dadurch gekennzeichnet, daß zwischen der Pumpe (22) und der Spritzdüse (16, 18) ein Druckregelventil (28, 30) geschaltet ist, das in Abhängigkeit von gleichen Parametern elektrisch angesteuert wird.

5. Scheibenwaschanlage nach Anspruch 4, dadurch gekennzeichnet, daß für Spritzdüsen (16, 18), die verschiedenen Scheiben (12, 14) zugeordnet sind, jeweils ein separates Druckregelventil (28, 30) vorgesehen ist.

6. Scheibenwaschanlage nach einem der vorhergehenden Ansprüche, dadurch gekennzeichnet, daß der Druck bis zu einer Geschwindigkeit des Fahrzeugs (10) von zwanzig km/h etwa 2,5 bar beträgt und darüber hinaus kontinuierlich oder stufenweise um etwa 0,5 bar pro 20 km/h Geschwindigkeitssteigerung zunimmt.

7. Scheibenwaschanlage nach einem der vorhergehenden Ansprüche, dadurch gekennzeichnet, daß weitere Fahrzeug- oder Umgebungsparameter zur Drucksteuerung oder Druckregelung verwendet sind.
